# EUROPEAN PATENT SPECIFICATION

(11) **EP 2 097 292 B1**
(45) Date of publication and mention of the grant of the patent: **11.08.2010**
(21) Application number: 07859532.9
(22) Date of filing: 28.12.2007
(51) Int. Cl.: B60N 2/30, B60R 21/02, B60N 2/01, B60N 2/36

(54) **FLEXIBLE SEAT SYSTEM**
FLEXIBLES SITZSYSTEM
SYSTEME DE SIEGE SOUPLE

(30) Priority: 28.12.2006 TR 200607585
(43) Date of publication of application: 09.09.2009
(73) Proprietor: Tofas Turk Otomobil Fabrikasi Anonim Sirketi, 16369 Bursa (TR)
(72) Inventor: IDER, S. Kemal, 06531 Ankara (TR); GOKLER, Mustafa Ilhan, 06531 Ankara (TR); ASATEKIN, Mehmet, 06531 Ankara (TR); UNLU, Canan, 06531 Ankara (TR); ANIK, Evren, 16369 Bursa (TR)
(74) Representative: Dericioglu, Ekin
(86) International application number: PCT/IB2007/055327
(87) International publication number: WO 2008/081400

(56) References cited:
- EP-A- 1 344 677
- WO-A-2004/037603
- DE-A1-102005 002 916
- DE-C- 699 589
- FR-A- 2 845 954
- JP-A- 10 129 354
- US-A1- 2002 017 797

## Description

### Field of the Invention

The present invention relates to an adjustable flexible seat system applied in motor vehicles.

### Background Art

Seats used in motor vehicles are comprised of a sitting portion to sit on and a backrest positioned perpendicular to the sitting portion. The sitting portion and the backrest are mounted to the vehicle by means of support legs.

Developments in the automotive sector cause an increase in the requests for multipurpose use of vehicles. More efficient and flexible use of the inner space of the vehicle is the first among the desired features. This has given rise to the necessity of seat systems adequate for carrying both goods and people.

In motor vehicles, especially when it is desired to carry goods with passenger carrying commercial vehicles, backrests of the rear seats are lowered onto the sitting portions (the backrest is folded onto the sitting portion so that it is brought to a horizontal position) and thus, load carrying volume (area) increases. In another system the backrest is tilted backwards and thereby load carrying capacity is enhanced. Additionally, in another system, the seats are dismantled and taken out of the vehicle. The place where the removed seat will be arranged constitutes a big problem. The applications in the abovementioned systems neither are ergonomic nor can they provide an efficient carrying volume.

In the Japanese Patent Application No. JP10129354, within the state of the art, it is disclosed that the sitting portions and backrests of the rear seats are erected and abutted to the front seats. But since the sitting portion and the backrest in the said . document are not aligned, a volume loss results and furthermore, since the rear seat is a single piece, the seats do not have separate optional movement mechanisms, and the use of this system decreases the efficiency.

In another Japanese patent application, within the state of the art, numbered JP653301, it is disclosed that the rear seats are brought to the upright position and are tied to the headrest of the front seat. But in the said document, since the seat cannot be fixed while the vehicle is moving, the seat oscillates and a noise is generated. Moreover, since the rear seats are tied to the front seats, the front seats cannot be moved forward and backward. Furthermore, the loads placed near the ceiling in the cargo area may slide and harm the driver and the passenger at the front.

US2002 017797 which is the closest prior art shows a rear seat, located at the very back row of the vehicle, which, when a cargo volume is desired to be formed while it is in the seating position, is disposed on the floor by being moved backward by means of the support legs coupled to the floor and the seat cushion of which is displaced from the housing and brought to a position parallel to the vehicle floor and the backrest of which is disposed in the housing from which the cushion is taken out; the seat further comprises a locking mechanism which enables locking of the seat and the middle row seat.

### Summary of the Invention

The present invention realizes a flexible seat system, for transportation of both passengers and loads, which provides rider safety and which can be moved ergonomically to form a cargo volume within the vehicle.

### Detailed Description of the Invention

The flexible seat system realized to fulfill the objectives of the invention is illustrated in the accompanying figures, in which;

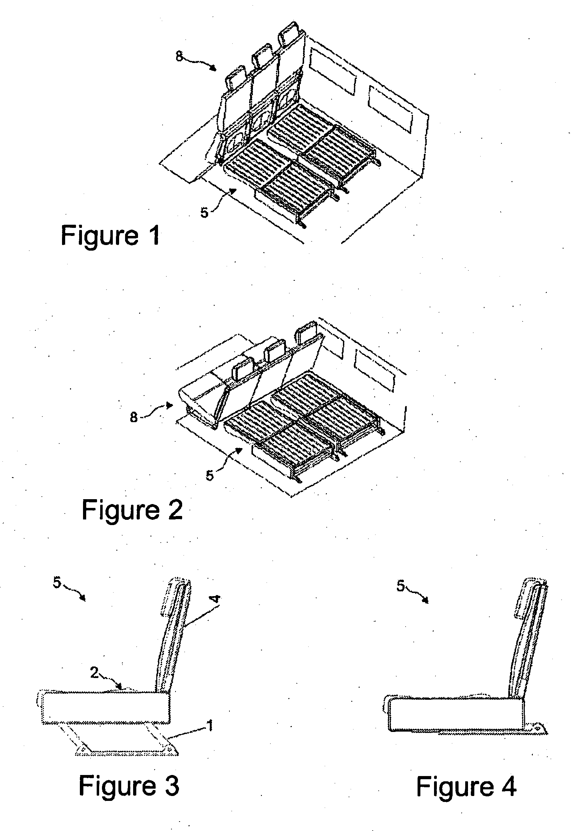

Figure 1 is the perspective view showing the full capacity cargo volume of the flexible seat system.
Figure 2 is the side view of the flexible seat system where the middle row seats are in seating position and the rear seats have formed a cargo volume.
Figure 3 is the side view of the rear seats of the flexible seat system in seating position.
Figure 4 is the side view of the rear seats of the flexible seat system moved forward.

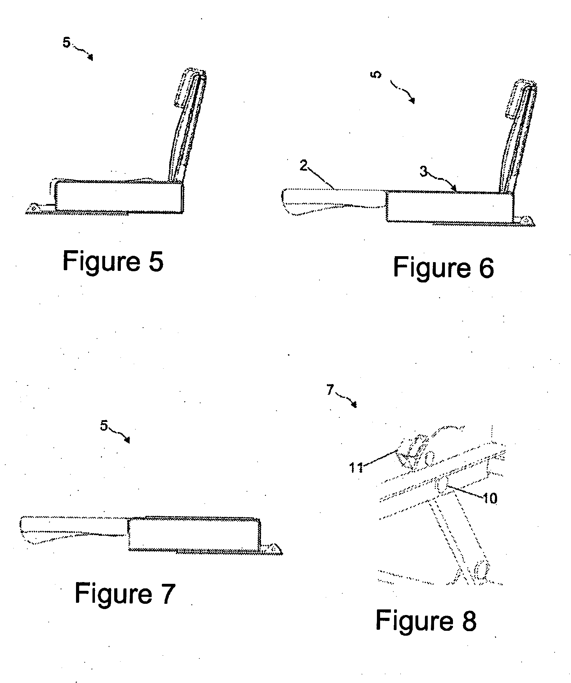

Figure 5 is the side view of the rear seats of the flexible seat system moved backward.
Figure 6 is the side view of the rear seats of the flexible seat system, whose seat cushions are displaced.
Figure 7 is the side view of the tilted position of the rear seats of the flexible seat system.
Figure 8 is the perspective view of the locking mechanism of the rear seat.

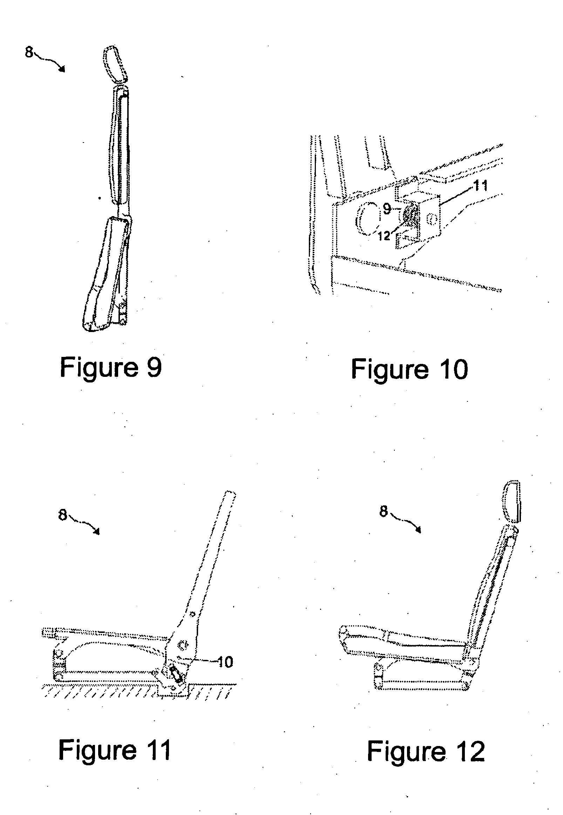

Figure 9 is the side view of the middle row seats of the flexible seat system in upright position.
Figure 10 is the perspective view of the locking mechanism of the middle row seats of the flexible seat system.
Figure 11 is the perspective view of the frame of the middle seat.
Figure 12 is the perspective view of the middle seat.

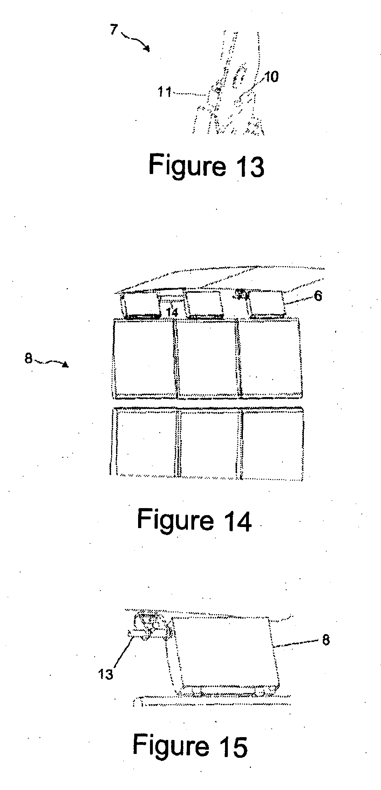

Figure 13 is the perspective view of the locking mechanism (locked) of the middle seat.
Figure 14 is the perspective view of the headrest locking mechanism.
Figure 15 is the zoomed perspective view of the headrest locking mechanism.

The parts in the figures are individually numbered, where the numbers refer to the following:
1. Support leg
2. Cushion
3. Housing
4. Backrest
5. Rear seats
6. Headrest
7. Mechanism
8. Middle row seats
9. Pin
10. Hole
11. Bracket
12. Spring
13. Metal slider
14. Plastic cover

The flexible seat system comprises at least one rear seat (5), located at the very back row of the vehicle, which, when a cargo volume is desired to be formed while it is in the seating position, is disposed on the floor by being moved forward and backward by means of the support legs (1) coupled to the floor and the seat cushion (2) of which is displaced from the housing (3) and brought to a position parallel to the vehicle floor and the backrest (4) of which is disposed in the housing (3) from which the cushion (2) is taken out,
at least one middle row seat (8) which is located in front of the rear seats (5), which comes to the upright position with its seat and backrest and which locks (gets fixed) when it comes to the upright position,
at least one locking mechanism (7) which enables locking (fixing) of the rear seat (5) and the middle row seat (8).

The flexible seat system comprises a bracket (11) which enables connection to the seat, at least one pin (9) movable in the bracket (11), a spring (12) continuously pushing the pin (9), and at least one hole (10) which comes to a position coaxial to the pin (9) when the seat is locked and which is located on the side frame of the seat where the pin (9) fits into.

When it is desired to open the cargo area of the vehicle rear seats (5), front part of the seat cushion (2) is connected with the middle row seats (8) without leaving any gap in between. Thus, recesses or protrusions which would narrow the cargo area and hinder loading of cargo are not formed.

When the middle row seat (8) comes to the upright position, the pin (9) and the hole (10) located on the side frame of the seat come to the same axis. Since the spring (12) pushes the pin (9), the pin (9) fits into the hole (10) and enables locking. When the middle row seat (8) is desired to be brought back to the seating position, the pin (9) is drawn back and taken out of the hole (10) preferably by using a drawing wire or a plastic arm and the lock is released. Then, the middle row seat (8) is moved and brought back to the seating position.

When the rear seat is brought to the seating position, the pin (9) and the hole (10) located on the side frame of the seat come to the same axis. Since the spring (12) pushes the pin (9), the pin (9) fits into the hole (10) and enables locking. When the rear seat (5) is desired to be tilted, the pin (9) is drawn back and taken out of the hole (10) preferably by using a drawing wire or a plastic arm and the lock is released. Then the rear seat (5) is moved forward or backward as required and it is tilted.

The locking mechanism (7) is preferably arranged on one or two sides of the seat frame.

The middle row seats (8) comprise at least one headrest (6) which ensures fixing of the seat and the user safety in upright position, and a metal slider (13) which fits into the housing within the headrest in the locked position of the headrest (6) and fixes the headrest (6) to the vehicle ceiling bracket.

The headrest locking system is covered by a plastic cover (14), in order not to impair the appearance and to prevent the passengers from getting injured.

In another embodiment of the invention, the headrests (6) of the middle row seats (8) fit into the housing situated on the ceiling coating and thereby the middle row seats are fixed.

The vehicle middle row seats (8) serve as a partition between the driver and the passenger sitting in front and the cargo area. Thus, the middle row seats (8) provide protection against the hazards which may come from the cargo area in case of accidents and sudden break. Furthermore, the middle row seats (8) which occupy less space in upright position, provide convenience in passing to the back row seats (5).

There are basically two different usages of the rear seats (5). When the vehicle is desired to be used solely for loading purposes, first of all the middle row seats (8) are brought to upright position. The rear seats (5) are moved forward and tilted right behind the middle row seats (8) so as to be parallel to the vehicle floor. Thus the largest cargo volume is attained. The second usage is transportation of passengers and cargo. In this case, while the middle row seats (8) are kept in seating position, the rear seats (5) are moved backwards and are tilted behind the middle row seats (8) so as to be parallel to the vehicle floor.

The middle row seats (8) consist of at least three separate seats comprising the same features and the rear seats (5) consist of at least two separate seats comprising similar features. These seats can be used in different configurations as required.

## Claims

1. A flexible seat system comprising at least one rear seat (5), located at the very back row of the vehicle, which, when a cargo volume is desired to be formed while it is in the seating position, is disposed on the floor by being moved forward and backward by means of the support legs (1) coupled to the floor and the seat cushion (2) of which is displaced from the housing (3) and brought to a position parallel to the vehicle floor and the backrest (4) of which is disposed in the housing (3) from which the cushion (2) is taken out; at least one middle row seat (8) which is located in front of the rear seats (5), which comes to the upright position with its seat and backrest and which locks (gets fixed) when it comes to the upright position; and at least one locking mechanism (7) which enables locking (fixing) of the rear seat (5) and the middle row seat (8).

2. A flexible seat system according to Claim 1, **characterized by** comprising a bracket (11) which enables connection to the seat, at least one pin (9) movable in the bracket (11), a spring (12) continuously pushing the pin (9), and at least one hole (10) which comes to a position coaxial to the pin (9) when the seat is locked and which is located on the side frame of the seat where the pin (9) fits into; wherein the locking mechanism (7) is located on the seat frame.

3. A flexible seat system according to Claim 1, **characterized by** middle row seats (8) comprising at least one headrest (6) which ensures fixing of the seat and the user safety in upright position, and a metal slider (13) which fits into the housing within the headrest in the locked position of the headrest (6) and fixes the headrest (6) to the vehicle ceiling bracket.

4. A flexible seat system according to Claim 1, **characterized in that** the back row (5) and middle row (8) seats are moved separately depending on the desired cargo volume.

## Patentansprüche

1. Ein flexibles Sitzsystem umfassend mindestens einen Hintersitz (5), der in der hintersten Reihe des Fahrzeugs angeordnet und auf den Boden aufgelegt ist, wobei er in der Sitzlage mittels der auf den Boden befestigten und sich abstützenden Beine (1), falls es gewünscht wird darin eine Frachtmenge anzuordnen, vorwärts und rückwärts bewegt werden kann und dessen Sitzkissen (2) aus dem Gehäuse (3) verlagert und zu einer dem Fahrzeugboden parallelen Lage gebracht wird, wobei dessen Rückenlehne (4) in das Gehäuse (3) versetzt wird, aus dem das Sitzkissen (2) herausgenommen wurde; sowie mindestens eine mittlere Sitzreihe (8), die vor dem Rücksitz (5) angeordnet ist und mit ihrem Sitz und ihrer Rückenlehne in eine senkrechte Lage gebracht und arretiert (befestigt) wird wenn sie in der senkrechten Position ist; sowie eine Arretiervorrichtung (7), welche die Verriegelung (Befestigung) des Rücksitzes (5) und des Sitzes in der mittleren Reihe (8) ermöglicht.

2. Ein flexibles Sitzsystem gemäß dem Anspruch 1, **gekennzeichnet durch** einen Befestigungsarm (11), der die Befestigung zum Sitz ermöglicht, mindestens einen Bolzen (9), der im Befestigungsarm (11) bewegbar ist, eine den Bolzen (9) stetig drückende Feder (12) sowie mindestens eine Bohrung (10), welche zu einer mit dem Bolzen koaxialen Lage kommt, wenn der Sitz verriegelt ist und welche auf dem Seitengestell des Sitzes angeordnet ist und worin der Bolzen passt sowie worin die Arretiervorrichtung (7) auf dem Sitzgestell angeordnet ist.

3. Ein flexibles Sitzsystem gemäß dem Anspruch 1, **gekennzeichnet durch** einen Sitz in der mittleren Reihe (8) umfassend mindestens eine Kopflehne (6), welche die Befestigung des Sitzes und die Sicherheit des Bedieners in der senkrechten Lage ermöglicht und einen Schieber aus Metal (13), der in der verriegelten Position der Kopflehne (6) in das Gehäuse innerhalb der Kopflehne passt und die Kopflehne (6) an den Rahmen der Fahrzeugdecke befestigt.

4. Ein flexibles Sitzsystem gemäß dem Anspruch 1, **gekennzeichnet dadurch, daß** der Sitz in der hinteren Reihe (5) sowie der Sitz in der mittleren Reihe (8) abhängig von der gewünschten Frachtmenge einzeln bewegt werden.

## Revendications

1. Système de siège souple se trouvant le rang le plus en arrière du véhicule ; possédant au moins un fauteuil de siège arrière comprenant un coussin de siège incliné (2) vers l'enveloppe (3) duquel est sorti le coussin de siège (2), rendu parallèle au dossier de fauteuil (4) et au fond de véhicule en déplaçant en avant et arrière quand on désire placer une volume de cargo dans la position assise grâce aux pieds pliables (1) sur l'endroit les supportant ; comprenant au moins un rang d'assis moyen se trouvant devant les fauteuils arrières (5) venant à la position verticale avec le fauteuil de siège et le dossier de fauteuil et se fermant (se fixant) en position verticale ; et possédant au moins un dispositif de verrouillage assurant le verrouillage (la fixation) l'un avec l'autre du fauteuil arrière (5) et groupe d'assis dans le rang moyen.

2. Système de siège souple selon la revendication 1, **caractérisé en ce qu'**il comprend un cadre (11) assurant la connexion avec le fauteuil, au moins une cheville (9) pouvant se déplacer à l'intérieur du cadre, un ressort (12) continuellement poussant ladite cheville, au moins un trou (10) coaxial avec la cheville et se trouvant sur le cadre latéral du fauteuil dans lequel s'est placée la cheville (9) et ce dans la position verrouillée du fauteuil, et que ledit dispositif de verrouillage (7) étant dans le cadre du fauteuil.

3. Système de siège souple selon la revendication 1, **caractérisé en ce qu'**il comprend un groupe d'assis en rang moyen (8) ayant au moins une tête de fauteuil (6) assurant la sécurité d'utilisation et la position debout du fauteuil, et un verrou métallique (13) étant placé à l'intérieure de la tête de fauteuil (6) quand cette dernière est dans la position fermée, et que la tête de fauteuil (6) s'est fixée au cadre de plafond du véhicule grâce à ce verrou.

4. Système de siège souple selon la revendication 1, **caractérisé en ce que** les fauteuils dans le groupe d'assis en rang arrière (5) et le groupe d'assis moyen (8) se meuvent indépendamment les uns les autres.
